# EUROPÄISCHE PATENTSCHRIFT

(11) **EP 1 297 610 B1**
(45) Veröffentlichungstag und Bekanntmachung des Hinweises auf die Patenterteilung: **17.08.2005**
(21) Anmeldenummer: 01956289.1
(22) Anmeldetag: 20.06.2001
(51) Int. Cl.: H02K 23/66, H02K 5/14

(54) **ELEKTRISCHE ANTRIEBSEINHEIT**
ELECTRICAL DRIVE UNIT
UNITE D'ENTRAINEMENT ELECTRIQUE

(30) Priorität: 21.06.2000 DE 10029452; 19.06.2001 DE 10129234
(43) Veröffentlichungstag der Anmeldung: 02.04.2003
(73) Patentinhaber: ROBERT BOSCH GMBH, 70442 Stuttgart (DE)
(72) Erfinder: URSEL, Eckhard, 77815 Buehl (DE); HAUSSECKER, Walter, 77830 Buehlertal (DE); HESSDOERFER, Robert, 97753 Karlstadt-Stetten (DE)
(86) Internationale Anmeldenummer: PCT/DE2001/002314
(87) Internationale Veröffentlichungsnummer: WO 2001/099259

(56) Entgegenhaltungen:
- EP-A- 0 865 148
- DE-A- 3 838 285
- DE-A- 4 337 390
- DE-A- 19 710 015
- DE-A- 19 851 455
- US-A- 5 528 093

## Beschreibung

### Stand der Technik

Die Erfindung geht aus von einer elektrischen Antriebseinheit nach der Gattung des Anspruchs 1. Eine derartige Antriebseinheit ist aus dem Dokument DE-A-198 51 455 bekannt. Aus der EP 538 495 A1 ist ein elektromotorischer Fensterheberantrieb bekannt, bei dem ein Elektronikgehäuse auf ein Getriebegehäuse gesteckt wird. Das Elektronikgehäuse und das Getriebegehäuse sind an dieser Verbindungsstelle offen und müssen abgedichtet werden.

Aus der DE 198 39 333 C1 ist eine Antriebseinrichtung bekannt, bei der ein abgeschlossenes Elektronikgehäuse auf ein abgeschlossenes Getriebegehäuse montiert ist. Die Hallsensoren sind dabei auf einer Leiterplatte in dem Elektronikgehäuse angeordnet.

### Vorteile der Erfindung

Die erfindungsgemässe elektrische Antriebseinheit mit den kennzeichnenden Merkmalen des Anspruchs 1 hat demgegenüber den Vorteil, dass auf einfache Art und Weise ein Elektronikgehäuse, das kundenspezifisch ausführbar ist, an eine elektrische Antriebseinheit angeordnet werden kann, die zum grössten Teil aus Standardgehäusen, wie dem Motorgehäuse und dem Getriebegehäuse, aufgebaut ist.

Durch die in den abhängigen Ansprüchen aufgeführten Massnahmen sind vorteilhafte Weiterbildungen und Verbesserungen der im Anspruch 1 genannten Antriebseinheit möglich.

Das Elektronikgehäuse ist vorteilhafterweise an einem Stecker angeordnet, weil dadurch nur der Stecker den kundenspezifischen Anforderungen mit seiner Steckerform und/oder Anzahl von Steckkontakten angepasst werden muss.

Vorteilhafterweise verwendet man für die Signalempfänger zur Dreherkennung Hallsensoren.

Das Elektronikgehäuse kann vorteilhafterweise sowohl in radialer als auch in axialer Richtung am Stecker-Bürstenhalter befestigt werden, wodurch eine Einbaurichtung des Elektronikgehäuses den jeweiligen äusserem Umständen angepasst werden kann.

### Zeichnung

Ein Ausführungsbeispiel der Erfindung ist in der Zeichnung vereinfacht dargestellt und in nachfolgenden Beschreibung näher erläutert.

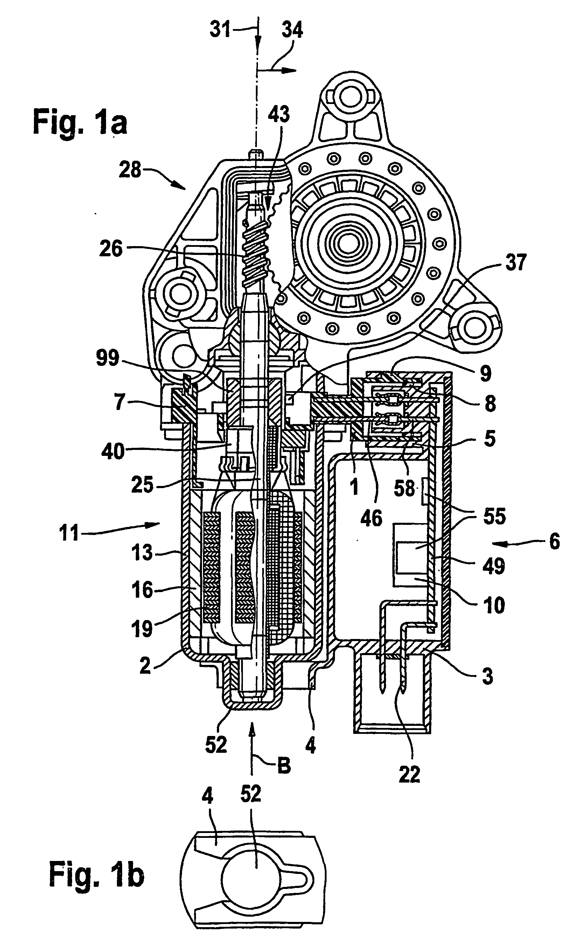

Es zeigen
Figur 1a eine teilweise geschnittene elektrische Antriebseinheit, und
Figur 1b eine Aufsicht auf die erfindungsgemäss ausgebildete elektrische Antriebseinheit in Blickrichtung B der Figur 1a.

### Beschreibung des Ausführungsbeispiels

Figur la zeigt eine erfindungsgemäss ausgebildete elektrische Antriebseinheit 6, beispielsweise für die Verwendung als Fensterhebergetriebemotor.
Die elektrische Antriebseinheit 6 besteht zumindest aus einem Elektromotor 11, einem Getriebe 43 und einer Motorelektronik 10.
Ein elektrischer Kommutatormotor, als ein Beispiel für einen Elektromotor 11, besteht zumindest aus einem Kommutator 40, einem Motorgehäuse 13, das beispielsweise als Polrohr oder auch als Poltopf 2 ausgebildet ist und als magnetisches Rückschlusselement dient, und am Motorgehäuse 13 angeordneten Magneten 16.
Die elektrische Antriebseinheit 6 weist eine Rotorwelle 25 auf, die von dem Motorgehäuse 13 bis in ein Getriebegehäuse 28 hineinragt und entsprechend bspw. im Motorgehäuse 13 und im Getriegehäuse 28 gelagert ist.
Auf der Rotorwelle 25 im Bereich der Magneten 16 ist ein Blechpaket 19 angeordnet, auf dem eine Wicklung angeordnet ist.
An dem dem Elektromotor 11 gegenüberliegenden axialen Ende der Rotorwelle 25 ist an der Rotorwelle 25 eine Verzahnung 26 ausgebildet, die mit einer Verzahnung des Getriebes 43 in Wechselwirkung steht.
Das Getriebe 43 und die Verzahnung 26 sind in dem Getriebegehäuse 28 angeordnet.

Zwischen dem Motorgehäuse 13 und zumindest teilweise zwischen dem Getriebegehäuse 28 ist ein Bürstenhalter 7 angeordnet. Auf dem Bürstenhalter 7 ist zumindest ein Signalempfänger 37 zur Dreherkennung der Rotorwelle 25, beispielsweise der Drehzahl oder Drehrichtung, vorhanden, beispielsweise in Form von Hallsensoren. Auf der Rotorwelle 25 ist dementsprechend ein Signalgeber bspw. in Form eines Ringmagneten 99 angeordnet.
An dem Bürstenhalter 7 ist bspw. einteilig ein Stecker 1 mit Steckkontakten 46 ausgebildet, der bspw. zumindest teilweise aus dem Getriebegehäuse 28 herausragt. Die Steckkontakte 46 sind bspw. in dem Stecker 1 und weiterführend in dem Bürstenhalter 7 eingespritzt.
Das Motorgehäuse 13, der Bürstenhalter 7 und das Getriebegehäuse 28 sind miteinander verbunden, d.h. sie sind dicht aneinander angeordnet und deshalb wasserdicht.

Die elektrische Antriebseinheit 6 weist weiterhin ein dicht abgeschlossenes Elektronikgehäuse 3 auf, das einem zum Stecker 1 passenden Gegenstecker 5 aufweist. Mittels einer Fixiervorrichtung 9, beispielsweise in Form von Rastelementen, ist der Gegenstecker 5 des Elektronikgehäuses 3 an dem Stecker 1, der hier einteilig mit dem Bürstenhalter 7 verbunden ist, befestigt.
Ein Dichtelement 8 ist zwischen Stecker 1 und Gegenstecker 5 angeordnet, der die Steckkontakte 46 vor Feuchtigkeit schützt.

In dem Elektronikgehäuse 3 ist die Motorelektronik 10 angeordnet. Die Motorelektronik 10 besteht beispielsweise aus zumindest einer Leiterplatte 49 mit verschieden elektrischen und/oder elektronischen Bauelementen 55.
Die Leiterplatine 49 hat ebenfalls Steckelemente 58, die die elektrischen Steuersignale und/oder Stromversorgung an den Elektromotor 11 weiterleiten.

Die Steckkontakte 58 sind bspw. ebenfalls in das Elektronikgehäuse 3 eingespritzt und so nach aussen wasserdicht abgeschlossen.
Weiterhin weist das Elektronikgehäuse 3 einen Elektronikgehäuseanschlussstecker 22 auf, der zur Verbindung nach aussen zu einer elektrischen Energieversorgung dient.

Das Elektronikgehäuse 3 ist in diesem Beispiel in radialer Richtung 34 an den Bürstenhalter 7 aufgesteckt worden. Der Stecker 1 am Bürstenhalter 7 kann aber auch so ausgebildet sein, dass das Elektronikgehäuse 3 in axialer Richtung 31 aufgesteckt werden kann.

Figur 1b zeigt eine Teilaufsicht in axialer Richtung auf die elektrische Antriebseinheit 6.
Das Elektronikgehäuse 3 weist bspw. zumindest eine Klammer 4 auf, mittels der es am axialen Ende des Motorgehäuse 13, einer Lagerbuchsenaufnahme 52, aufgesteckt und befestigt ist. Die Befestigung kann auch anders sein und bspw. auch am Stecker 1 ausgebildet sein.

## Patentansprüche

1. Elektrische Antriebseinheit (6),
- mit einem Getriebegehäuse (28),
- mit einem Motorgehäuse (13),
- mit einem Bürstenhalter (7),
- mit einem separat ausgebildeten, aufsteckbarem Elektronikgehäuse (3), welches einen zum Stecker (1) des Bürstenhalters (7) passenden Gegenstecker (5) aufweist,
- wobei an dem Bürstenhalter (7) zumindest ein Signalempfänger (37) zur Dreherkennung montiert ist,
**dadurch gekennzeichnet, dass** der Bürstenhalter (7) mit dem Motorgehäuse (13) und dem Getriebegehäuse (28) wasserdicht verbunden ist,
und am Bürstenhalter einstückig ein Stecker (1) mit Steckkontakten (46) ausgebildet ist, und das Elektronikgehäuse im separierten Zustand dicht abgeschlossen ist.

2. Elektrische Antriebseinheit (6) nach Anspruch 1, **dadurch gekennzeichnet, dass** das Elektronikgehäuse (3) im separierten Zustand wasserdicht abgeschlossen ist.

3. Elektrische Antriebseinheit nach Anspruch 1, **dadurch gekennzeichnet, dass** der Signalempfänger (37) ein Hallsensor ist.

4. Elektrische Antriebseinheit nach Anspruch 1, **dadurch gekennzeichnet, dass** das Elektronikgehäuse (3) in radialer Richtung (34) an einem Stecker (1) befestigbar ist.

5. Elektrische Antriebseinheit nach Anspruch 1, **dadurch gekennzeichnet, dass** das Elektronikgehäuse (3) in axialer Richtung (31) an einem Stecker (1) befestigbar ist.

6. Elektrische Antriebseinheit nach Anspruch 1, **dadurch gekennzeichnet, dass** der Bürstenhalter (7) Steckkontakte (46) aufweist, mit denen eine Elektronik (10) elektrisch verbunden ist.

7. Elektrische Antriebseinheit nach Anspruch 6, **dadurch gekennzeichnet, dass** die Elektronik (10) in einem Elektronikgehäuse (3) angeordnet ist, und dass das Elektronikgehäuse (3) Steckelemente (58) aufweist, die mit den Steckkontakten (46) elektrisch verbindbar sind.

## Claims

1. Electrical drive unit (6),
- having a gearbox housing (28),
- having a motor housing (13),
- having a brush holder (7),
- having a separate, plug-on electronics housing (3) which has a mating plug (5) which fits the plug (1) on the brush holder (7),
- with at least one signal receiver (37) for rotation identification being mounted on the brush holder (7),
**characterized in that** the brush holder (7) is connected in a watertight manner to the motor housing (13) and to the gearbox housing (28),
and a plug (1) with plug contacts (46) is formed integrally on the brush holder, and the electronics housing is closed in a sealed manner in the separated state.

2. Electrical drive unit (6) according to Claim 1, **characterized in that** the electronics housing (3) is closed in a watertight manner in the separated state.

3. Electrical drive unit according to Claim 1, **characterized in that** the signal receiver (37) is a Hall sensor.

4. Electrical drive unit according to Claim 1, **characterized in that** the electronics housing (3) can be attached to a plug (1) in the radial direction (34).

5. Electrical drive unit according to Claim 1, **characterized in that** the electronics housing (3) can be attached to a plug (1) in the axial direction (31).

6. Electrical drive unit according to Claim 1, **characterized in that** the brush holder (7) has plug contacts (46) to which electronics (10) are electrically connected.

7. Electrical drive unit according to Claim 6, **characterized in that** the electronics (10) are arranged in an electronics housing (3), and **in that** the electronics housing (3) has plug elements (58) which can be electrically connected to the plug contacts (46).

## Revendications

1. Unité d'entraînement électrique (6) comprenant
- un boîtier de transmission (28),
- un boîtier de moteur (13),
- un support de balai (7),
- un boîtier électronique (3) réalisé séparément et enfichable, comportant un connecteur complémentaire (5) adapté au connecteur (1) du support de balai (7),
- le support de balai (7) étant équipé d'au moins un récepteur de signaux (37) pour la détection de la vitesse de rotation,
**caractérisée en ce que**
le support de balai (7) est relié de manière étanche à l'eau au boîtier du moteur (13) et au boîtier de transmission (28),
le support de balai est réalisé en une seule pièce avec un connecteur (1) muni de contacts (46) et
le boîtier électronique (3) est fermé de manière étanche lorsqu'il est à l'état séparé.

2. Unité d'entraînement électrique (6) selon la revendication 1,
**caractérisée en ce que**
le boîtier électronique (3) est fermé de manière étanche à l'eau lorsqu'il est à l'état séparé.

3. Unité d'entraînement électrique (6) selon la revendication 1,
**caractérisée en ce que**
le récepteur de signal (37) est un capteur Hall.

4. Unité d'entraînement électrique (6) selon la revendication 1,
**caractérisée en ce que**
le boîtier électronique (3) est fixé à un connecteur (1) dans la direction radiale (34).

5. Unité d'entraînement électrique (6) selon la revendication 1,
**caractérisée en ce que**
le boîtier électronique (3) est fixé dans la direction axiale (31) à un connecteur (1).

6. Unité d'entraînement électrique (6) selon la revendication 1,
**caractérisée en ce que**
le support de balai (7) comporte des contacts de connexion (46) reliés électriquement à un circuit électronique (10).

7. Unité d'entraînement électrique (6) selon la revendication 6,
**caractérisée en ce que**
le circuit électronique (10) est logé dans un boîtier (3) et le boîtier (3) du circuit électronique comporte des éléments de connexion (56) susceptibles d'être reliés électriquement aux contacts (46) de connexion.
